# EUROPÄISCHE PATENTANMELDUNG

(11) **EP 4 194 264 A1**
(43) Veröffentlichungstag der Anmeldung: **14.06.2023**
(21) Anmeldenummer: 22211015.7
(22) Anmeldetag: 02.12.2022
(51) Int. Cl.: B60P 3/36, B60R 15/00

(54) **WOHNEINHEIT, INSBESONDERE WOHNMOBIL**

(30) Priorität: 13.12.2021 DE 202021003763 U
(71) Anmelder: Langemann, Michael, 45481 Mülheim a.d. Ruhr (DE)
(72) Erfinder: Langemann, Michael, 45481 Mülheim a.d. Ruhr (DE)
(74) Vertreter: Demski, Siegfried

(57) **Zusammenfassung**

Die Erfindung betrifft eine Wohneinheit, insbesondere Wohnmobil 1, welche mit Einbaumöbeln und wenigstens einem Sanitärbereich 15 ausgestattet ist, wobei vorhandene Begrenzungswände 17, 18 teilweise veränderbar sind. Um einen Teilbereich der Wohneinheit, welche nur zeitweise genutzt wird, sinnvoller Weise der Wohnfläche zur Verfügung zu stellen, ist erfindungsgemäß vorgesehen, dass zumindest ein Teil einer innenliegenden Begrenzungswand 17, 18 des Sanitärbereiches 15 mit einer Tür in derart verlagerbar ist, dass die Grundfläche des Sanitärbereiches 15 in einer ersten Position vergrößert und in einer zweiten Position verkleinert ist. Durch diese Maßnahme kann erreicht werden, dass der Wohnbereich nur dann verkleinert werden muss, wenn der Sanitärbereich 15 benutzt wird.

## Beschreibung

Die Erfindung betrifft eine Wohneinheit, insbesondere Wohnmobil, welche mit Einbaumöbeln und wenigstens einem Sanitärbereich ausgestattet ist, wobei vorhandene Begrenzungswände teilweise veränderbar sind.

Wohneinheiten sind in vielfältiger Form bekannt, beispielsweise als feststehende Baucontainer oder in fahrbarer Form als Wohnmobil. Die Wohneinheit ist hierbei mit Einbaumöbeln und wenigstens einem Sanitärbereich ausgestattet, wobei die einzelnen Bereiche der Wohneinheit durch vorhandene Begrenzungswände unterteilt sind, die teilweise veränderbar sein können. Der verfügbare Benutzungsbereich in einer Wohneinheit ist in der Regel von wenigen Ausnahmen abgesehen nicht besonders groß. Aus diesem Grunde werden beispielsweise bewegliche Begrenzungswände vorgesehen, die beispielsweise einen Wohnbereich in einen Schlafbereich abgrenzen können. Teilweise werden auch verschiebbare Einbaumöbel verwendet, die je nach Platzbedarf verschoben werden um beispielsweise einen Kochbereich zu vergrößern oder verkleinern und demzufolge den Wohnbereich zu vergrößern. Im Vordergrund steht immer den begrenzt vorhandenen Raum möglichst optimal zu nutzen.

Aus der DE 10 2018 112 907 977 A1 ist beispielsweise eine Innenausbauvorrichtung bekannt, die eine bewegbare Türeinheit aufweist, wobei erforderliche Versorgungseinheiten und Funktionseinheiten abhängig von der Türposition weiterhin verwendbar sein sollen. Es handelt sich in diesem Fall um ein Wohnmobil, welches eine Trennwand mit Tür aufweist, die zwischen zwei Positionen hin und her bewegt werden kann.

Aus dem deutschen Gebrauchsmuster DE 296 01 380 U1 ist ebenfalls ein Innenausbau einer mobilen Einheit bekannt, wobei in diesem Fall im hinteren Teil der mobilen Einheit eine Duschkabine und gegenüberliegend sanitäre Anlagen angeordnet sind. Eine zum Wageninneren vorhandene Seitenwand der Duschkabine bildet gleichzeitig die Rückwand eines Schrankes. Gegenüber dem Schrank und neben den sanitären Anlagen ist eine Küchenzeile vorgesehen. Hierbei ist sowohl die Küchenzeile als auch der Sanitärbereich auf einem Podest angeordnet, um den Schrank in die Duschkabine ein- oder auszuschwenken. Der Küchenbereich weist ein ausschwenkbares Kochfeld und eine Arbeitsplatte auf. Durch die aufgezeigten Maßnahmen kann der nutzbare Wohnraum vergrößert werden und nur im Falle einer Benutzung des Sanitärbereiches bzw. der Küche besteht die Notwendigkeit den vorhandenen Wohnraum vorübergehend zu verkleinern. Im Vordergrund steht das Anliegen, den begrenzt vorhandenen Raum einer mobilen Einheit durch einen zweckentsprechenden Innenausbau mit einer bestimmten Anordnung von Funktionselementen aufzuteilen und durch eine einfache und schnelle Verlagerung bestimmter Funktionselemente den vorhandenen Raum unterschiedlich nutzen zu können.

Lösungsvorschläge für den Innenausbau von Wohnmobilen sind insofern bekannt, die aber alle mit mehr oder weniger behafteten Nachteilen verbunden sind, wenn die Raumausnutzung verbessert werden soll.

Die Aufgabe der vorliegenden Erfindung besteht darin, einen Teilbereich der Wohneinheit, welcher nur zeitweise genutzt wird, sinnvollerweise der Wohnfläche zur Verfügung zu stellen.

Zur Lösung der Aufgabenstellung ist vorgesehen, dass zumindest ein Teil einer innenliegenden Begrenzungswand des Sanitärbereiches mit einer Tür in derart verlagerbar ist, dass die Grundfläche des Sanitärbereiches in einer ersten Position vergrößert und in einer zweiten Position verkleinert ist. Vorteilhafte Ausgestaltungen der Wohneinheit sind aus den Unteransprüchen zu entnehmen.

Um den Wohnbereich zu vergrößern ist in diesem Fall vorgesehen, dass eine Begrenzungswand des Sanitärbereiches verlagerbar ist. Diese Begrenzungswand ist zudem mit einer Tür versehen, um den Sanitärbereich betreten zu können. Hierbei soll mit Verlagerung der Begrenzungswand die Grundfläche des Sanitärbereiches in einer ersten Position vergrößert und in einer zweiten Position verkleinert werden. Die Begrenzungswand mit Tür ist hierbei in derart gestaltet, dass sie beweglich mit einer Außen- oder Innenwand verbunden ist, um die Begrenzungswand entweder zu verschwenken oder klappbar zu gestalten. Zu diesem Zweck ist die Begrenzungswand senkrecht in zwei Hälften unterteilt, welche über schwenkbare Gelenke, Scharniere oder Türscharniere miteinander verbunden sind. Eine Hälfte der Begrenzungswand kann somit beweglich mit einer Außen- oder Innenwand verbunden sein, während die zweite Hälfte mit dieser ebenfalls verschwenkbar verbunden ist und eine Tür aufweisen kann, um die Begehbarkeit des Sanitärbereiches zu ermöglichen.

In Ausgestaltung der Erfindung ist vorgesehen, dass eine erste Hälfte der Begrenzungswand mit einer Innen- oder Außenwand verschwenkbar verbunden ist und eine zweite Hälfte der Begrenzungswand mit der ersten Hälfte nach links oder rechts verschwenkbar verbunden ist, wobei die zweite Hälfte als Tür ausgebildet ist. Durch die hälftige Teilung der Begrenzungswand kann diese beispielsweise zusammengeklappt werden, es besteht aber darüber hinaus die Möglichkeit in der Wohneinheit die beiden Hälften der Begrenzungswand in einem spitzen oder stumpfen Winkel zueinander anzuordnen. Bei einer spitzwinkligen Anordnung ragen die beiden Hälften der Begrenzungswand in den Wohnraum hinein, während bei einer stumpfwinkligen Anordnung der beiden Hälften zu einer Verkleinerung des Sanitärbereiches, beispielsweise einer Toilette führen und damit gleichzeitig der Wohnbereich vergrößert wird. Zu diesem Zweck ist im Weiteren vorgesehen, dass die beiden Hälften der Begrenzungswand gegeneinander um annährend 90° nach Links oder Rechts verschwenkbar sind, um die spitzwinklige bzw. stumpfwinklige Ausrichtung zu ermöglichen.

In vorteilhafterweise kann die Begrenzungswand in der zweiteiligen Ausführung in einem Eckbereich der Wohneinheit angeordnet sein, aber ebenso besteht die Möglichkeit die Begrenzungswand beispielsweise zwischen einem Schlaf- und einem Wohnbereich anzuordnen, sodass eine Unterteilung der Wohneinheit möglich ist. In beiden Fällen ist hierbei vorgesehen, soweit der Sanitärbereich aus einer Toilette besteht, dass die erste Hälfte der Begrenzungswand von einer Toilette weg oder in Richtung der Toilette verschwenkbar ist. Alternativ könnte es sich auch um eine Dusche handeln. In Folge dessen ist der Toilettenbereich entweder vergrößert und ermöglicht das Eintreten in den Toilettenbereich oder aber verkleinert, wobei die freigegebene Fläche der Wohnfläche zur Verfügung gestellt wird.

In weiterer Ausgestaltung der Erfindung ist vorgesehen, dass die erste Hälfte der Begrenzungswand und/oder die zweite Hälfte sowohl im vergrößerten als auch im verkleinerten Toilettenbereich abdichtend an eine Innen- oder Außenwand anliegt, um den Sanitärbereich, insbesondere Toilettenbereich abzudichten.

Gemäß der Ausgestaltung der Begrenzungswand besteht somit die Möglichkeit die Begrenzungswand von einer in den Wohnbereich hineinragenden Position in der spitzwinkligen Anordnung in derart zu überführen, dass eine stumpfwinklige Anordnung mit einer Verkleidung des Sanitärbereiches vorliegt. Speziell der Bereich vor einer Toilette wird nur bei deren Benutzung benötigt, während bei einer Nicht-Benutzung die Tür unmittelbar vor einem Toilettenbecken durch Verschwenken der beiden Hälften der Begrenzungswand platziert werden kann. Auf diese Weise wird erreicht, dass der Raum zwischen Tür und dem Toilettenbecken zur allgemeinen Nutzung freigegeben wird.

Die vorliegende Erfindung zeichnet sich im Weiteren dadurch aus, dass die Wohneinheit beispielsweise Bestandteil eines Wohnmobils, eines Wohnanhängers, eines Container oder eines Tiny House ist.

Der besondere Vorteil der vorliegenden Anmeldung besteht darin, dass eine Vergrößerung des zur Verfügung stehenden Wohnbereichs dadurch erzielt wird, dass eine zweiteilige Begrenzungswand einerseits zur Vergrößerung des Sanitärbereiches, beispielsweise einer Toilette, und andererseits zur Verkleinerung des Sanitärbereiches verwendet werden kann und damit diese Fläche für den allgemeinen Wohnbereich zur Verfügung gestellt wird. Zu diesem Zweck kann die zweigeteilte Begrenzungswand von einer spitzwinkligen Position in eine stumpfwinklige Position überführt werden, wobei die eine Hälfte der Begrenzungswand an einer Innen- oder Außenwand verschwenkbar befestigt ist, während die zweite Hälfte der Begrenzungswand wiederum an der ersten Hälfte der Begrenzungswand schwenkbar über einen Winkel von 90° nach Links und Rechts befestigt ist. Hierdurch kann quasi ein Umklappen der beiden Begrenzungshälften nach Innen oder Außen in Richtung des Sanitärbereiches erfolgen.

Die Erfindung wird im Nachfolgenden anhand der Figuren nochmals erläutert.

Es zeigt
- Fig. 1: in einer schematischen Draufsicht ein Wohnmobil mit Begrenzungswand für eine Toilette und/oder Dusche und
- Fig. 2: in einer schematischen Draufsicht ein Wohnmobil mit einer verschwenkbaren Begrenzungswand für eine Toilette.

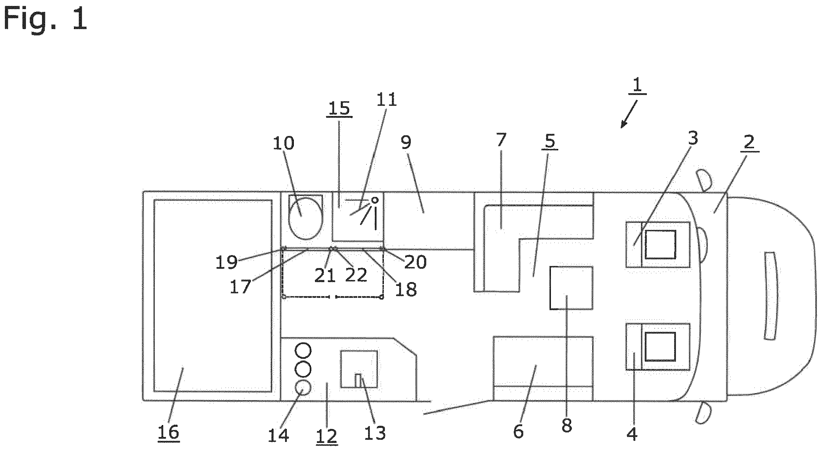

Figur 1 zeigt in einer schematischen Ansicht ein Wohnmobil 1 ohne Dachaufbau, sodass man in den Innenraum des Wohnmobils 1 blicken kann. Das Wohnmobil 1 besteht aus einem Fahrzeug 2 mit einem Fahrersitz 3 und einem Beifahrersitz 4. Hinter dem Fahrersitz 3 und Beifahrersitz 4 befindet sich ein Wohnbereich 5 mit einem Schrank 6, einem Sitzbereich 7 und einem Tisch 8. Neben dem Sitzbereich 7 befindet sich ein Einbauschrank 9 und ein Sanitärbereich 15 mit einer Toilette 10 und einer Dusche 11. Gegenüber der Toilette 10 und der Dusche 11 befindet sich ein Kochbereich 12 mit Spülbecken 13 und Herdplatten 14. An den Kochbereich 12 und den Sanitärbereich 15 schließt sich ein Schlafbereich 16 an, der in diesem Fall durch die Anordnung eines Doppelbettes beispielhaft dargestellt ist. Die Anordnung der Sitzgelegenheit 7 und damit des Wohnbereiches 5, sowie der Kochnische 12, des Sanitärbereiches 15 und des Schlafbereiches 16 kann beliebig abgeändert werden.

Der Sanitärbereich 15 weist demgegenüber eine besondere Gestaltung auf, die darin besteht, dass zwei schwenkbewegliche Begrenzungswände 17, 18 vorhanden sind. Die Begrenzungswände 17, 18 bestehen aus jeweils 2 verschwenkbaren Einzelwänden, die einerseits über ein Gelenk 19, 20 mit einer Wandfläche verbunden sind und über zwei weitere Gelenke 21, 22 zusätzlich untereinander bewegbar sind. Die gezeichnete Anordnung mit durchgezogener Linie zeigt die beiden Begrenzungswände 17, 18 in einer Position, wo die beiden hälftigen Begrenzungswände unmittelbar aneinander liegen und sich unmittelbar vor der Toilette 10 bzw. der Dusche 11 befinden. Auf diese Weise ist der Sanitärbereich 15 verkleinert und demgegenüber der Wohnbereich, insbesondere des Kochbereich 12 beispielsweise vergrößert. Die gestrichelte Position der beiden Begrenzungswände 17, 18 zeigt demgegenüber die Möglichkeit durch zweifaches Aufklappen der Begrenzungswände 17, 18 einen vergrößerten Sanitärbereich 15 zu schaffen, sodass sowohl die Toilette 10 als auch die Dusche 11 benutzt werden kann. Die Begrenzungswände 17, 18 sind hierbei so gestaltet, dass die vordere sichtbare Hälfte der Begrenzungswände 17, 18 nach außen verschwenkt werden kann und im Anschluss die beiden verdeckt liegenden Hälften der Begrenzungswände 17, 18 um 90° verschwenkt werden, sodass ein Abschluss des Sanitärbereiches 15 bei einer Benutzung möglich ist. Mit Hilfe der Gelenke 19, 20 bzw. 21,22 können die hälftigen Begrenzungswände 17,18 verschwenkt werden, um die beiden gewünschten Positionen gegenüber dem Sanitärbereich 15 einzunehmen.

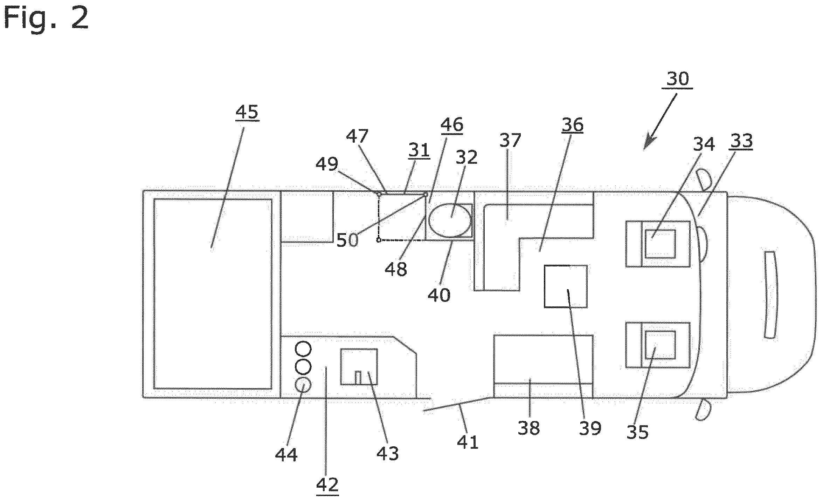

Figur 2 zeigt in einer schematischen Draufsicht ein Wohnmobil 30 mit einer verschwenkbaren Begrenzungswand 31 für eine Toilette 32. Auch in diesem Fall besteht das Wohnmobil 30 aus einem Fahrzeug 33 mit einem Fahrersitz 34 und einem Beifahrersitz 35. Hinter dem Fahrersitz 34 und Beifahrersitz 35 befindet sich ein Wohnbereich 36 mit einem Sitzbereich 37, einem Schrank 38 und einem Tisch 39. Angrenzend an den Sitzbereich 37 befindet sich die Toilette 32, welche von einer Wand 40 abgeschirmt ist. Neben der Eingangstür 41 befindet sich der Schrank 38 und auf der gegenüberliegenden Seite ein Kochbereich 42 mit einem Spülbecken 43 und Herdplatten 44. An den Kochbereich 42 schließt sich ein Schlafbereich 45 an, der in diesem Fall durch die Anordnung eines Doppelbettes beispielhaft dargestellt ist. Auch bei diesem Ausführungsbeispiel kann die Anordnung des Sitzbereichs 37 und damit des Wohnbereiches 36, des Kochbereiches 42 und ein Sanitärbereich 46 beliebig angeordnet werden. Der Sanitärbereich 46 weist wiederum eine besondere Gestaltung auf die darin besteht, dass eine schwenkbewegliche Begrenzungswand 31 vorhanden ist. Die Begrenzungswand 31 ist in zwei Hälften unterteilt und besteht aus zwei verschwenkbaren Einzelwänden 47, 48. Eine Einzelwand 47 der Begrenzungswand 31 ist über ein Gelenk 49 mit der Außenwand des Fahrzeuges 33 verbunden, während ein zweites Gelenk 50 mit der ersten 47 und zweiten Einzelwand 48 der Begrenzungswand 31 verbunden ist. Die beiden Hälften der Begrenzungswand 31 befinden sich in der eingezeichneten Position unmittelbar vor der Toilette 32, sodass der Raum verkleinert ist und damit gleichzeitig der Wohnbereich 36 vergrößert ist. Zur Benutzung der Toilette 32 wird die Einzelwand 47 der Begrenzungswand 31 von der Außenwand des Fahrzeuges 33 wegbewegt und anschließend die Einzelwand 48 der Begrenzungswand 31, welche in der Regel mit einer Tür versehen ist, um 180° in Richtung auf die Außenwand des Fahrzeuges 33 verschwenkt, sodass die beiden Einzelwände 47, 48 der Begrenzungswand 31 die gestrichelte Position einnehmen. Dadurch, dass die beiden Einzelwände 47, 48 der Begrenzungswand 31 über ein Gelenk 50 miteinander verbunden sind, besteht eine ausreichende Beweglichkeit beziehungsweise Verschwenkbarkeit der beiden Einzelwände 47, 48 der Begrenzungswand 31, um die gewünschten Positionen mit einem vergrößerten oder verkleinerten Sanitärbereich 46 einzunehmen.

### Bezugszeichenliste:

- 1: Wohnmobil
- 2: Fahrzeug
- 3: Fahrersitz
- 4: Beifahrersitz
- 5: Wohnbereich
- 6: Schrank
- 7: Sitzbereich
- 8: Tisch
- 9: Einbauschrank
- 10: Toilette
- 11: Dusche
- 12: Kochbereich
- 13: Spülbecken
- 14: Herdplatten
- 15: Sanitärbereich
- 16: Schlafbereich
- 17: Begrenzungswand
- 18: Begrenzungswand
- 19: Gelenk
- 20: Gelenk
- 21: Gelenk
- 22: Gelenk
- 30: Wohnmobil
- 31: Begrenzungswand
- 32: Toilette
- 33: Fahrzeug
- 34: Fahrersitz
- 35: Beifahrersitz
- 36: Wohnbereich
- 37: Sitzbereich
- 38: Schrank
- 39: Tisch
- 40: Wand
- 41: Eingangstür
- 42: Kochbereich
- 43: Spülbecken
- 44: Herdplatte
- 45: Schlafbereich
- 46: Sanitärbereich
- 47: Einzelwand
- 48: Einzelwand
- 49: Gelenk
- 50: Gelenk

## Patentansprüche

1. Wohneinheit, insbesondere Wohnmobil (1, 30), welche mit Einbaumöbeln und wenigstens einem Sanitärbereich (15, 46) ausgestattet ist, wobei vorhandene Begrenzungswände (17, 18, 31) teilweise veränderbar sind,
**dadurch gekennzeichnet,**
**dass** zumindest ein Teil einer innenliegenden Begrenzungswand (17, 18, 31) des Sanitärbereiches (15, 46) mit einer Tür in derart verlagerbar ist, dass die Grundfläche des Sanitärbereiches (15, 46) in einer ersten Position vergrößert und in einer zweiten Position verkleinert ist.

2. Wohneinheit nach Anspruch 1,
**dadurch gekennzeichnet,**
**dass** die Begrenzungswand (17, 18, 31) beweglich mit einer Außen- oder Innenwand der Wohneinheit verbunden ist.

3. Wohneinheit nach Anspruch 1 oder 2,
**dadurch gekennzeichnet,**
**dass** die Begrenzungswand (17, 18, 31) verschwenkbar- und/oder klappbar ausgebildet ist.

4. Wohneinheit nach Anspruch 1, 2 oder 3,
**dadurch gekennzeichnet,**
**dass** die Begrenzungswand (17, 18, 31) senkrecht in zwei Hälften unterteilt ist, welche über verschwenkbare Gelenke (19, 20, 21, 22, 48, 49), Scharniere oder Türscharniere miteinander verbunden sind.

5. Wohneinheit nach einem der Ansprüche 1 bis 4,
**dadurch gekennzeichnet,**
**dass** eine erste Hälfte der Begrenzungswand (17, 18, 31) mit einer Innen- oder Außenwand der Wohneinheit verschwenkbar verbunden ist und eine zweite Hälfte der Begrenzungswand (17, 18, 31) mit der ersten Hälfte nach links oder rechts verschwenkbar verbunden ist, wobei die zweite Hälfte zumindest teilweise als Tür ausgebildet ist.

6. Wohneinheit nach einem der Ansprüche 1 bis 5,
**dadurch gekennzeichnet,**
**dass** eine geteilte Begrenzungswand (17, 18, 31) vorhanden ist, welche mit einer ersten Hälfte an einer Innen- oder Außenwand der Wohneinheit verschwenkbar befestigt ist und mit einer zweiten Hälfte schwenkbeweglich verbunden ist, sodass die geteilte Begrenzungswand (31) in zwei mögliche Positionen verschwenkbar ist, und zwar eine spitzwinklige oder stumpfwinklige Position zum Wohnbereich (5, 36).

7. Wohneinheit nach einem der Ansprüche 1 bis 5,
**dadurch gekennzeichnet,**
**dass** zwei spiegelsymmetrische Begrenzungswände (17, 18) mit hälftiger Unterteilung vorhanden sind, welche zur Verkleinerung des Sanitärbereiches (46) zweifach in Richtung des Sanitärbereiches (46) einklappbar sind oder zur Vergrößerung des Sanitärbereiches (46) zweifach ausklappbar sind.

8. Wohneinheit nach einem der Ansprüche 1 bis 7,
**dadurch gekennzeichnet,**
**dass** die beiden Hälften der Begrenzungswand (17, 18, 31) gegeneinander um annähernd 90 Grad nach links oder rechts verschwenkbar sind.

9. Wohneinheit nach einem der Ansprüche 1 bis 8,
**dadurch gekennzeichnet,**
**dass** die Begrenzungswand (17, 18, 31) in einem Eckbereich der Wohneinheit angeordnet ist oder dass die Begrenzungswand (17, 18, 31) zwischen einem Schlaf- und einem Wohnbereich (5, 36) angeordnet ist.

10. Wohneinheit nach einem der Ansprüche 1 bis 9,
**dadurch gekennzeichnet,**
**dass** die erste Hälfte der Begrenzungswand (17, 18, 31) und/oder die zweite Hälfte sowohl im vergrößerten als auch im verkleinerten Sanitärbereich (46) abdichtend an einer Innen- oder Außenwand der Wohneinheit anliegen.

11. Wohneinheit nach einem der Ansprüche 1 bis 9,
**dadurch gekennzeichnet,**
**dass** der Sanitärbereich (46) aus einer Toilette (10, 32) oder Dusche (11) besteht.

12. Wohneinheit nach einem der Ansprüche 1 bis 11,
**dadurch gekennzeichnet,**
**dass** die erste Hälfte der Begrenzungswand (31) von einer Toilette (10, 32) oder Dusche (11) weg oder in Richtung auf die Toilette (10, 32) oder Dusche (11) verschwenkbar ist.

13. Wohneinheit nach Anspruch 1,
**dadurch gekennzeichnet,**
**dass** die Wohneinheit Bestandteil eines Wohnmobils (1, 30), eines Wohnanhängers, eines Containers oder eines Tiny-Houses ist.
